# EUROPEAN PATENT APPLICATION

(11) **EP 1 022 447 A2**
(43) Date of publication of application: **26.07.2000**
(21) Application number: 00300453.8
(22) Date of filing: 21.01.2000
(51) Int. Cl.: F02B 69/00, F02D 19/06

(54) **Engine mounting apparatus and fuel delivery system and related conversion kit.**

(30) Priority: 21.01.1999 GB 9901341
(71) Applicant: The Ecological Engine Company Limited, Shool Lane, Hamble, Hampshire SO31 4NB (GB)
(72) Inventor: King, John, Workshop 1, Hamble, Hampshire S031 4NB (GB)
(74) Representative: Gill, David Alan

(57) **Abstract**

The present invention provides for an Engine-mounting apparatus for a liquid gas driven engine and comprising a bell housing adaptor (28), a crankshaft extension (30) and a torque convertor drive means (34), and also liquid gas fuel delivery apparatus comprising an engine management system arranged for petrol operation, a mechanical mono gas injection point for the said liquid gas, and a digital lambda computer arranged for emissions control. Such apparatus can advantageously be formed as part of a conversion kit for the replacement of a diesel power unit of an automobile with an at least selectively operable liquidgas driven unit.

## Description

The present invention relates to fuel delivery apparatus, and mounting apparatus, for an internal combustion engine and, in particular, but not exclusively, to such apparatus for forming a conversion kit for altering a petrol engine to a liquid-gas driven engine and, more specifically, for replacing a diesel power unit for a taxi cab with a petrol/liquid-gas dual fuel power unit.

While taxi cab engines are known that comprise petrol engines, the majority of taxi cab engines comprise a diesel unit such as a standard Nissan TD27 diesel engine. While such engines find wider use than petrol engines for taxi cabs, such diesel engines are nevertheless potentially disadvantageous due to their noise and emission levels and the need for expensive engine rebuilds and refits.

At present, significant perceived advantages arise in the potential use of, for example, a Liquid Petroleum Gas (LPG), Compressed Natural Gas (CNG), or Liquid Natural Gas (LNG) - hereinafter all identified as liquid gas fuels - fuelled engine in view of the reduced frequency of services, running costs and noise/emission levels but, to date, there is no means for effectively providing for the replacement of a diesel engine by, for example, liquid gas fuelled engine or indeed a selectively operable petrol/liquid gas dual fuelled engine. The small number of taxi cabs that are arranged to run on liquid gas fuel such as LPG are based on an original petrol engine power unit that has been converted in accordance with standard techniques for operation with LPG.

Thus, for a taxi cab having a diesel engine which requires a rebuild or refit, there is currently no option other than to attend to such rebuild or refit perhaps by way of adopting another diesel-powered unit and therefore retaining all of the aforementioned disadvantages.

The present invention seeks to provide for fuel delivery and engine mounting arrangements having advantages over known such arrangements and, in particular, which allow for the replacement of standard diesel engines with liquid gas fuelled engines and, in particular, a combined petrol/ liquid gas fuelled engine.

According to one aspect of the present invention, there is provided liquid gas fuel delivery apparatus comprising an engine management system arranged for petrol operation together with a mechanical mono gas injection point for the said liquid gas in conjunction with a digital lambda computer arranged for emissions control.

In particular a Motorola Engine Management system is included.

Such apparatus is advantageously easy and relatively quick to install.

According to another aspect of the invention, the above-mentioned apparatus forms part of a conversion kit for the replacement of a diesel power unit for a vehicle such as a taxi cab with a liquid gas driven unit or even a combined petrol/liquid gas dual fuelled unit.

According to yet another aspect of the present invention there is provided an engine-mounting apparatus for a liquid gas driven engine and comprising a bell housing adaptor, a crankshaft extension and a torque convertor drive means.

Preferably, the apparatus includes a mono gas injector arrangement.

Advantageously, the apparatus also includes at least one of the following:
a modified intake manifold modified such that the manifold plenum receives a throttle control connection and the mono gas injector within the space available;
a replacement purpose built exhaust system arranged to allow for longitudinal mounting of the engine block within the space available;
an air filter installation;
opposed engine mounting side brackets;
a modified sump having its base profile altered with regard to chassis cross-members; and
a timing disc ring assembly arranged for cooperation with the torque converter drive plate.

Advantageously, the opposed mounting brackets serve as a secure, but readily mountable, supporting arrangement not requiring skilled labour for their connection to the engine block, and the engine compartment. Each bracket can comprise two spaced mounting plates disposed in an angled relationship having regard to the surfaces of the engine block and the engine compartment on-which they are to be mounted.

According to a further aspect of the present invention the above-mentioned engine-mounting apparatus can form part of a conversion kit for the replacement of a diesel power unit for a taxi cab with a liquid gas driven unit or even a combined petrol/liquid gas dual fuelled unit.

The present invention is advantageous in that an engine and fuel system conversion arrangement can readily be provided for a taxi cab having an engine that requires a rebuild or total replacement.

Such an advantageous conversion arrangement can be provided so as to comprise, a petrol fuelled engine, an engineering component kit for providing the aforementioned engine-mounting apparatus and a gas conversion kit for providing the aforementioned fuel delivery apparatus.

The standard Nissan TD27 diesel engine currently employed as the power unit in taxi cabs can, in accordance with the present invention therefore be readily and simply replaced by a unit having a wide variety of advantages as discussed further below.

As mentioned above, the complete arrangement can be divided into three separate parts, the first of which comprises a standard petrol engine. In one advantageous embodiment, such an engine comprises the Rover K series 1.8 litre engine as it is considered that this engine has an appropriate power curve and is able to carry out the duty required.

While arrangements for achieving gaseous conversion from a petrol to a dual-fuel arrangement including liquid gas driven mode of operation are already known, the present invention is particularly advantageous in employing novel control features such as novel engine and fuel delivery management features.

The present invention is particularly advantageous in that the cost of installing the converted power unit in accordance with the present invention can be less than the cost of a complete diesel-engine rebuild or taxi cab refit while the time taken to carry out a conversion and replacement according to the present invention is similar to that of a complete engine rebuild and refit. The running cost of a liquid gas fuelled engine with the torque and power characteristics required for a taxi cab for example is found to be somewhat lower than that of the currently used Nissan TD27 diesel engine and such cost-savings are further enhanced when taking into account the price of a fuel such as a liquid gas as compared with diesel.

Also, engines running on a liquid gas tend to have a greater life time than the petrol-fuelled engines and require less frequency of servicing because there is less pollution to the engine oil and filters. Such an increase in service intervals also leads to lower running costs and improved engine longevity.

As regards operational characteristics, it is known that petrol and liquid gas fuelled engines run much more smoothly than diesel engines and create less noise pollution. In particular, it is known that diesel fuelled vehicles, especially when running at a low speed and/or when cold, produce adverse emissions whereas liquid gas fuelled engines are known, even when running slowly or cold, to produce substantially lower emissions than diesel engines.

The present invention is therefore particularly advantageous in that it allows for the removal and replacement of a large diesel engine with a smaller, and lighter, petrol engine which can advantageously be converted to be fuelled by means of petrol or a liquid gas fuel such as LPG and so as to achieve the full range of advantages described herein.

The invention is described further hereinafter, by way of example only, with reference to the accompanying drawings in which:
Fig. 1 is an exploded perspective view of an engine arranged for mounting in relation to apparatus according to an embodiment of the present invention;
Fig. 2 is a cross-sectional view of the engine/transmission interface of the embodiment of Fig. 1; and
Fig. 3 is a perspective view of the complete fuel intake, engine and exhaust system in accordance with an embodiment of the present invention.

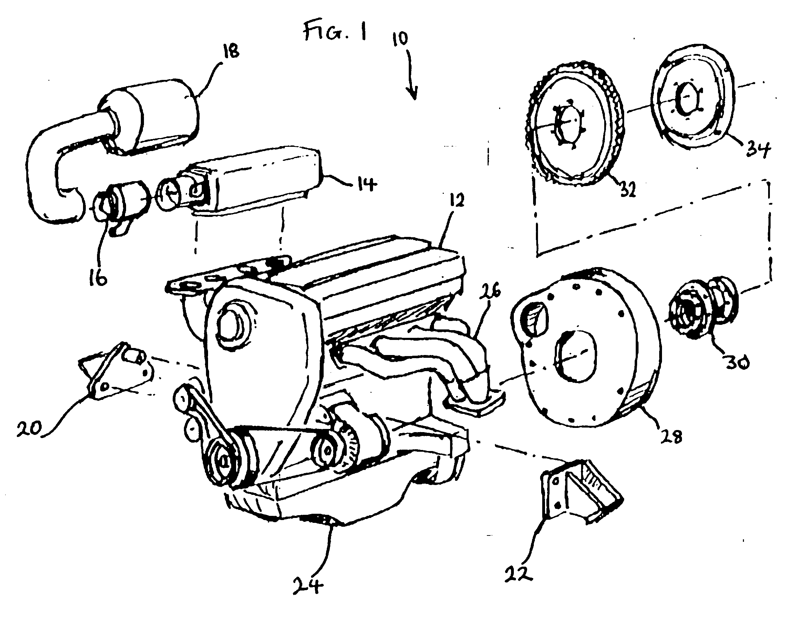

Turning first to Fig. 1, there is illustrated an exploded perspective view of an engine mounting arrangement according to the present invention.

The particularly illustrated embodiment of the present invention relates to an arrangement whereby a standard Rover K series engine can be employed to replace the standard diesel engine of a taxi cab and once engine mounting features according to the present invention have been introduced. Fig. 1 illustrates various elements 10 of the engine mounting apparatus according to an embodiment of the present invention and that are arranged to adapt the engine engine block 12 of the aforementioned standard Rover K series engine for use in a taxi cab and so as to be powered by liquid gas fuel or petrol fuel.

Associated with the engine block 12 is a modified fuel intake manifold 14 in operative communication with a mechanical mono gas injector 16 which in turn is in operative communication with an air-filter arrangement 18. Left and right side engine mounting brackets 20, 22 are provided for the actual mounting of the engine block 12 within the engine compartment of the taxi cab and, to further the advantageous manner in which such an engine can be used for the aforementioned powering of a taxi cab, a modified sump arrangement 24 is provided beneath the engine block 12.

The outlet side of the engine block 12 is provided with a modified exhaust manifold 26 which feeds to a purpose-built exhaust arrangement as will be described later.

At the power take-off side of the engine block 12, there is provided an annular bell housing adaptor 28 which is arranged for coaxial mounting relative to a crankshaft extension member 30, a timing disc/ring gear assembly 32 and a torque converter drive plate 34.

The crankshaft extension 30, timing disc/ring gear assembly 32 and torque converter drive plate 34 are provided so as to advantageously provide for an operative interface to the transmission system as will be described further below.

The aforementioned mounting arrangement elements illustrated in Fig. 1 in association with the engine 12 serve to allow for the ready replacement of a standard diesel engine in a taxi cab with, for example, a standard petrol engine readily modified for use with a liquid gas fuel.

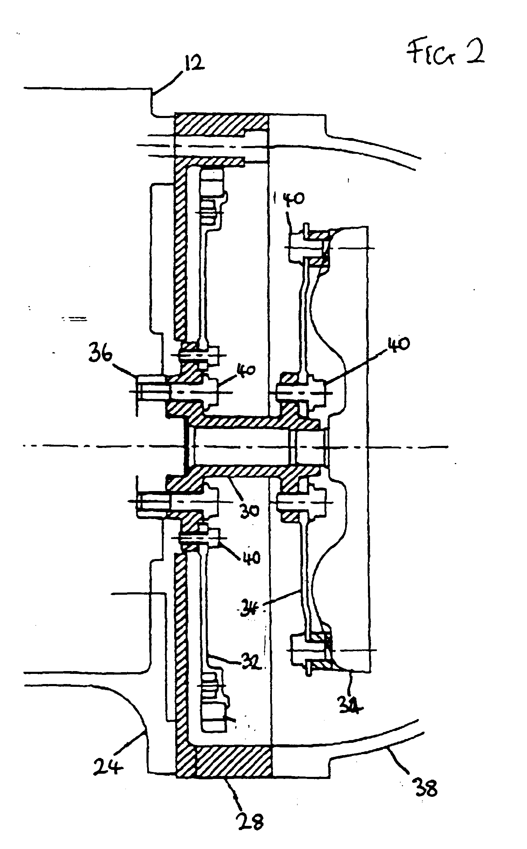

Turning now to Fig. 2, there is illustrated a cross-section through the interface between the engine block 12 and a transmission system and is achieved by means of the bell housing adaptor 28, crankshaft extension member 30, timing disc/ring gear assembly 32 and torque converter drive plate 34 as discussed above.

Fig. 2 also illustrates the housing for the transmission which, for example, can comprise a standard Nissan automatic transmission.

The various elements appearing in Fig. 2 as also found in Fig. 1 are assigned the same reference numerals and Fig. 2 clearly illustrates the manner in which the engine block 12 is arranged for connection to the bell housing 28 with a crankshaft 36 extending thereto. As clearly illustrated, the bell housing 28 houses the timing disc arrangement 32 and also part of the crankshaft extension 30 which, that is end remote from the crankshaft 36, extends into the transmission housing 38 for connection to the torque converter including the torque converter drive plate 32.

The crankshaft extension member 30, the timing disc arrangement 32 and the torque converter arrangement are all mounted by way of a series of mounting bolts 40 as illustrated.

The arrangement illustrated in Fig. 2 plays an important part in ensuring that the modified engine according to the present invention is suitable for powering a taxi cab given the particular operational requirements of such a vehicle.

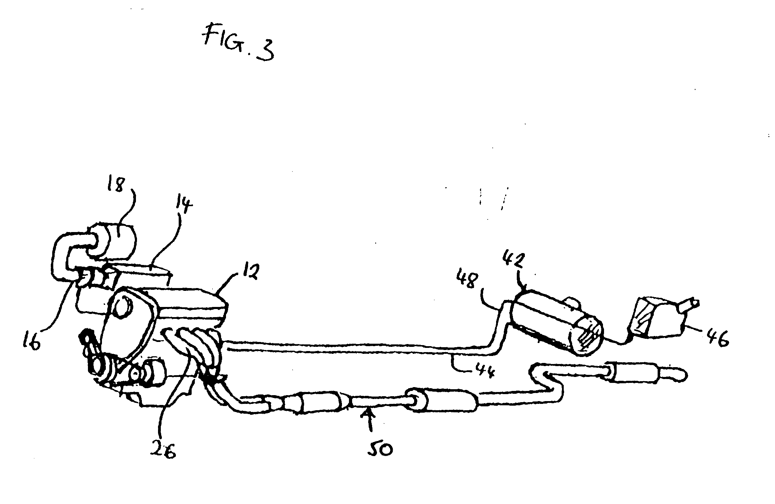

Turning now to Fig. 3 there is illustrated a perspective view of the complete engine system according to an illustrated embodiment of the present invention and which illustrates a tank 42 for containing a liquid gas, a feedpipe 44 for delivering the liquid gas to the gas injector 16 via a standard vaporizing unit and also, as a fall-back, a petrol tank 46 arranged for storing standard petrol fuel which can be delivered by way of feedline 48 to the engine for operation in a standard petrol mode should, for some reason, operation by means of liquid fuel not be possible.

Also illustrated in Fig. 3 is the exhaust arrangement 50 which extends from the aforementioned modified exhaust manifold 26.

Further, the engine mountings are specifically engineered in accordance with the present invention to allow the original engine mountings to be employed without requiring alteration whilst carrying the replacement smaller, and lighter, petrol engine. This is a particularly advantageous feature which allows for ease of replacement of a large and heavy diesel engine with the smaller, and lighter, petrol engine converted for at least selective use of, for example, LPG.

The illustrated embodiment of the present invention includes a modified inlet manifold which allows the whole unit to fit under the original taxi cab bonnet and also serves as a particularly important component in the conversion to, for example, liquid gas fuel as required.

The illustrated embodiment can also include purpose built exhaust system including a catalytic converter designed for the application such as is mandatory for petrol-fuelled vehicles.

A water-piping kit for cooling-water flow and water heating requirements and also an engine cooler and fan and radiator thermostat switch are also important to the present invention in that they serve to change the heat exchange requirements to suit the petrol liquid gas engine.

An air-filter assembly is provided so as to allow the replacement power unit readily to fit under the original taxi cab bonnet and a "Mini" type fuel tank including a high pressure submerged pump is advantageously employed and arranged to be fitted into the boot of the taxi cab and so as to allow for cold starting with petrol as a fuel if required. Provision of such a fuel tank can also advantageously extend the range of the cab for situations when the liquid gas fuel has been exhausted.

Wiring modifications are needed to allow the electronic controller management systems to fit into the cab in accordance with the revised layout and which also incorporate systems arranged to cope with the dual fuels and to further control emissions from the power unit.

Finally, alterations to the power steering pump arrangement can also readily be made so as to advantageously allow the whole arrangement to fit inside the engine compartment of the taxi cab. Such arrangements can comprise two adaptors arranged for quick and easy connection between, for example, the original equipment and the Rover equipment.

In accordance with the present invention it will be appreciated that a conversion arrangement can be provided for a taxi cab that is easy to instal without requiring a high level of technical expertise; is cheaper to install than rebuilding the original diesel engine; is cheaper to run than such a normal diesel engine; is quieter in operation than such a normal diesel engine; and is much more environmentally friendly due to lower emission levels than known diesel engines.

It should be appreciated that the present invention is not restricted to the details of the aforegoing embodiment. For example, various features of the invention as illustrated in accordance with the particular embodiment described need not be provided in the combination suggested and various features can be chosen so as to provide the advantages required. Also, the various features of the present invention need not form part of a conversion kit arrangement for replacement a known diesel power unit and can advantageously be employed as particularly advantageous features of a liquid gas driven power unit and, in particular, a selectively operable petrol liquid gas fuel arrangement.

## Claims

1. Engine-mounting apparatus for a liquid gas driven engine and comprising a bell housing adaptor (28), a crankshaft extension (30) and a torque convertor drive means (34).

2. Apparatus as claimed in Claim 1 and further including a mono gas injector arrangement (16).

3. Apparatus as claimed in Claim 2 and including an intake manifold (14) arranged such that the manifold plenum receives a throttle control connection and the mono gas injector within the space available.

4. Apparatus as claimed in Claim 1, 2 or 3, and including an exhaust system arranged to allow for longitudinal mounting of the engine block within the space available.

5. Apparatus as claimed in Claim 1, 2, 3 or 4, and including an air filter installation (18).

6. Apparatus as claimed in any one of Claims 1-5, and including opposed engine mounting side brackets (20, 22).

7. Apparatus as claimed in any one of Claims 1-6, and including a sump (24) having its base profile formed to allow for chassis cross-members.

8. Apparatus as claimed in any one of Claims 1-7, and including a timing disc ring assembly (32) arranged for cooperation with the torque converter drive means (34).

9. A conversion kit for the replacement of a diesel power unit for an automobile with an at least selectively operable liquid-gas driven unit and including apparatus as claimed in any one or more of Claims 1-8.

10. Liquid gas fuel delivery apparatus comprising an engine management system arranged for petrol operation, a mechanical mono gas injection point for the said liquid gas, and a digital lambda computer arranged for emissions control.

11. A conversion kit for the replacement of a diesel power unit for an automobile with an at least selectively operable liquid-gas driven unit and including apparatus as claimed in Claim 10.
